# EUROPEAN PATENT APPLICATION

(11) **EP 3 113 402 A1**
(43) Date of publication of application: **04.01.2017**
(21) Application number: 14884144.8
(22) Date of filing: 25.08.2014
(51) Int. Cl.: H04L 1/18

(54) **METHOD AND APPARATUS FOR PROCESSING RETRANSMITTED DATA IN HS-SCCH-LESS HARQ**

(30) Priority: 25.02.2014 CN 201410064119
(71) Applicant: ZTE Microelectronics Technology Co., Ltd., Guangdong 518000 (CN)
(72) Inventor: DENG, Chunhua, Shenzhen Guangdong 518057 (CN); LI, Aijun, Shenzhen Guangdong 518057 (CN)
(74) Representative: Awapatent AB
(86) International application number: PCT/CN2014/085111
(87) International publication number: WO 2015/127769

(57) **Abstract**

The embodiments of the present invention provide a method and apparatus for processing retransmitted data in HS-SCCH-less, and the method includes: searching for an automatic repeat request (HARQ) process when data are retransmitted in an HS-SCCH-less blind detection process; and processing the retransmitted data according to a condition of the HARQ process.

## Description

### Technical Field

The present invention relates to the communication field, and specifically, to a method and apparatus for processing retransmitted data in HS-SCCH-less.

### Background of the Related Art

HS-SCCH-less (High Speed Shared Control less operation) is an important characteristic of CPC (Continuous Packet Connectivity) introduced to UMTS (Universal Mobile Telecommunications System) in R7 to improve a service capacity of a small data volume relatively fixed service (such as VOIP (Voice over Internet Protocol)) of the UMTS system. An improvement of VOIP by the UMTS system, i.e. HS-SCCH-less, is different from other data downloading that needs dynamic scheduling with an HS-SCCH (High Speed Shared Control Channel) at each time, it is in a way of fixedly configured N (N=1,2,3,4) types of transmission formats to perform blind detection by a UE to save the HS-SCCH overheads, so that the capacity of the system is improved.

When a UE is configured to operate in a HS-SCCH-less mode by a network, if a valid format corresponding to an ID of the UE itself is not detected in a corresponding HS-SCCH by the UE, a HS-SCCH-less blind detection is required to be started at once.

The HS-SCCH-less blind detection protocol specifies a data storage including a circular buffer for 12 sub-frames and a HARQ (Hybrid Automatic Repeat Request) buffer for 3 HARQ processes. For the HARQ process, the protocol doesn't explicitly specify that there are only 3 HARQ processes, so that the management of the HARQ process is a technical difficulty. At present, a solution of some manufactures is increasing the HARQ buffer to 13 processes as well, the problem is a much larger area of a chip than ever before, and a larger consumption, which are particularly disadvantageous for a terminal product in cost and consumption aspects.

### Summary of the Invention

The technical problem to be solved by the embodiments of the present invention is to provide a method and apparatus for processing retransmitted data in HS-SCCH-less, to save control signaling load.

In order to solve the above-mentioned technical problem, the embodiments of the present document provide a method for processing retransmitted data in HS-SCCH-less, comprising:
searching for an automatic repeat request (HARQ) process when data are retransmitted in an HS-SCCH-less blind detection process;
processing the retransmitted data according to a condition of the HARQ process.

Preferably, the method further has the following feature: processing the retransmitted data according to a condition of the HARQ process comprises:
performing an HARQ process combination on historical sub-frame data and current sub-frame data if the HARQ process is not full,, and processing data after the HARQ process combination;
performing a self-decoding processing on the retransmitted data if the HARQ process is full.

Preferably, the abovementioned method also has the following feature:
performing an HARQ process combination on historical sub-frame data and current sub-frame data if the HARQ process is not full, comprises:
   when data are retransmitted for a first time, if the HARQ process is not full, performing the HARQ process combination on the historical sub-frame data and the current sub-frame data in a case of determining a cycle redundancy check error when transmitting data initially,
   processing data after the HARQ process combination, comprises:
      decoding and performing cyclic redundancy check on the data after the HARQ process combination, and if the cyclic redundancy check is correct, reporting an Acknowledgement and clearing a current HARQ process occupation flag.

Preferably, the abovementioned method further has the following feature:
performing an HARQ process combination on historical sub-frame data and current sub-frame data if the HARQ process is not full, comprises:
when data are retransmitted for a second time, in a case that the HARQ process corresponding to retransmitting data for the first time is found, performing the HARQ process combination on the historical sub-frame data and the current sub-frame data,
processing data after the HARQ process combination, comprises:
   decoding and performing cyclic redundancy check on the data after the HARQ process combination, and clearing a current HARQ process occupation flag.

Preferably, the method further has the following feature: processing the retransmitted data according to a condition of the HARQ process comprises:
clearing the HARQ process if 13 or more sub-frames are continuously occupied by the HARQ process.

In order to solve the abovementioned problem, the embodiment of the present invention further provides an apparatus for processing retransmitted data in HS-SCCH-less, comprising:
a searching module, configured to search for an automatic repeat request (HARQ) process when data are retransmitted in an HS-SCCH-less blind detection process; and
a processing module, configured to process the retransmitted data according to a condition of the HARQ process.

Preferably, the above device is further characterized in that:
the processing module is configured to, if the HARQ process is not full, perform an HARQ process combination on historical sub-frame data and current sub-frame data and process data after the HARQ process combination; and if the HARQ process is full, perform a self-decoding processing on the retransmitted data.

Preferably, the above device is further characterized in that:
the processing module is configured to perform an HARQ process combination on historical sub-frame data and current sub-frame data and process the data after the HARQ process combination in the following way: when data are retransmitted for a first time, if the HARQ process is not full, performing the HARQ process combination on the historical sub-frame data and the current sub-frame data in a case of determining a cycle redundancy check error when transmitting data initially; decoding and performing cyclic redundancy check on the data after the HARQ process combination, and if the cyclic redundancy check is correct, reporting an Acknowledgement and clearing a current HARQ process occupation flag.

Preferably, the above device is further characterized in that:
the processing module is configured to perform an HARQ process combination on the historical sub-frame data and current sub-frame data and process the data after the HARQ process combination in the following way: when data are retransmitted for a second time, in a case that the HARQ process corresponding to retransmitting data for the first time is found, performing the HARQ process combination on the historical sub-frame data and the current sub-frame data; decoding and performing cyclic redundancy check on the data after the HARQ process combination, and clearing a current HARQ process occupation flag.

Preferably, the above device is further characterized in that:
the processing module is configured to process the retransmitted data according to a condition of the HARQ process in the following way: clearing the HARQ process if 13 or more sub-frames are continuously occupied by the HARQ process.

Above all, the embodiments of the present invention provide a method and apparatus for processing retransmitted data in HS-SCCH-less, which can save control signaling load and flexibly schedule the HS-SCCH-less process.

### Brief Description of Drawings

FIG. 1 is a flow chart of a method for processing retransmitted data in HS-SCCH-less according to an embodiment of the present invention;
FIG. 2 is a schematic diagram of an apparatus for processing retransmitted data in HS-SCCH-less according to an embodiment of the present invention.

### Preferred Embodiments of the Invention

Hereinafter, in conjunction with the accompanying drawings, the embodiments of the present invention will be described in detail. It should be illustrated that, under the situation of no conflict, the embodiments and the features of the embodiments in the present application can be freely combined.

The embodiments of the present invention are suitable for management of an HARQ (Hybrid Automatic Repeat Request) buffer of HS-SCCH-less blind detection at a UMTS (Universal Mobile Telecommunications System) HSPA+ (High-Speed Packet Access+) terminal. HS-SCCH-less is an important characteristic of CPC (Continuous Packet Connectivity), and is mainly applied to periodical and very small traffic service, such as VoIP (Voice over Internet Protocol). The HS-SCCH-less does not use an HS-SCCH channel to dynamically schedule when data service is initially transmitted, but is scheduled by an HS-DSCH (High-Speed Downlink Shared Channel) blind detection, whose benefit is that a lot of control signaling load is saved.

Parameters provided by an upper layer of the HS-SCCH-less comprise: a number of a code track of the HS-DSCH (High Speed Downlink Shared Channel), and a list of TBSize (Transmission-Block Size) (4 are provided at most). If a process of the HS-SCCH less is started, a processing of UE is as follows:
if no valid HS-SCCH is detected in a sub-frame, the HS-SCCH less blind detection is required to be started. Then blind detection operation is required to be performed on the lists of TBSize configured by the upper layer one by one. If a certain TB passes the blind detection, an ACK (Acknowledgement) is required to be fed back, and if all of the blind detections fail, an initial LLR (Log-Likelihood Ratio) is required to be retained for combination when HS-SCCH type 2 performs a scheduling in future. It is noted that mask-removing needs to be performed at upper 16 bits of a CRC with an H-RNTI of a UE during HS-DSCH blind detection. A key point of the blind detection is to perform UE-dedicated H-RNTI masking on CRC. If data of a packet are scheduled to a certain UE by a base station, when the packet of data is transmitted, a CRC will be added to data of the packet, and the H-RNTI masking of the UE is performed on the CRC. (H-RNTI is a unique identity which is configured by a network for a UE in a connected status, and is unique in a range of a RNC such that it would not overlap those of other UEs).

The HS-DSCH is a shared channel, for general services, and the HS-SCCH is decoded by each UE according to an H-RNTI (HSDPA (High Speed Downlink Packet Access) Radio Network Temporary Identity) of the UE itself, so that whether current sub-frame has a HS-DSCH scheduling is known. However, in an HS-SCCH-less mode, the HS-SCCH is not sent corresponding to an initial-transmitted network, an HS-SCCH channel assigned to the UE itself is required to be identified by the UE according to H-RNTI assigned to the UE itself.

If a valid HS-SCCH type1 is detected in a sub-frame, a normal process of the HS-DSCH is performed. If a valid HS-SCCH type2 is detected in a sub-frame and is a second transmission (a first retransmission), rate de-matching is required to be performed on an initial transmission of the sub-frame (turbo decoding is not started), then rate de-matching is performed on the transmission, and an HARQ combination is started, then turbo decoding is started after combination and CRC (Cyclic Redundancy Check) is performed. If the CRC is successful, ACK (Acknowledgement) is fed back, and if the CRC is unsuccessful, NACK (Negative Acknowledgement) is fed back. It should also be noted that mask-removing needs to be performed at the upper 16 bits of the CRC with the H-RNTI (HSDPA-Radio Network Temporary Identifier, HSDPA (High Speed Downlink Package)) of the UE during HS-DSCH blind detection.

If a valid HS-SCCH type2 is detected in a sub-frame and is a 3rd transmission (a second retransmission), a process of a normal HARQ combination is started, and turbo decoding and CRC operation are started. If the CRC is successful, the ACK is fed back, and if the CRC is unsuccessful, the NACK is fed back. It should also be noted that mask-removing needs to be performed at lower bits and upper bits of the CPC with the H-RNTI of the UE during HS-DSCH blind detection.

The second transmission and the third transmission are dynamically scheduled by the network with the HS-SCCH type2, TBSize is designated by an Index of 2 bits, and a ptr, the number of the sub-frame required to be combined before the TBSize, is also designated, 3 bits represent (1...7), a number of combined sub-frame is 6+ptr, and the maximum number is 13, so initial information LLR of 13 sub-frames at most is required to be stored. A redundant version number for the second transmission is 3, and a redundant version number for the third transmission is 4.

For an HS-SCCH-less mode of WCDMA (Wideband Code Division Multiple Access), 24960 LLRs in all of 13 sub-frames are required to be stored in a de-interleaving buffer, and the data are stored in which area is determined by the software whenever one sub-frame is received. At the same time, an HARQ Process is required to be separately started in the HS-SCCH-less mode of WCDMA, therefore an additional register is required by corresponding read-write HARQ to distinguish a normal HARQ service from a HS-SCCH-less HARQ service. There is no regulation for management of the HARQ process in HS-SCCH-less in specifications.

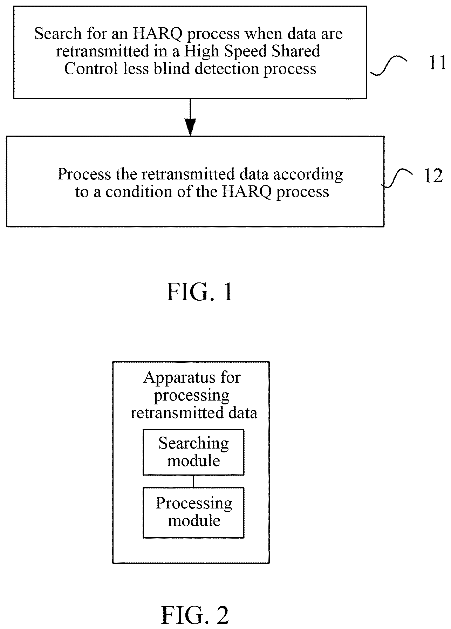

FIG. 1 is a flow chart of a method for processing retransmitted data in HS-SCCH-less according to an embodiment of the present invention, and as shown in FIG. 1, the method of the present embodiment comprises:
In S11, an HARQ process is searched for when data are retransmitted in an HS-SCCH-less blind detection process.
In S12, the retransmitted data are processed according to a condition of the HARQ process.

The method according to the embodiment of the present invention can implement management of the HARQ process of the HS-SCCH-less and can save control signaling load.

In the embodiment, for a first transmission, blind detection is performed for 4 times at most by the UE according to a TBS (Transmission-Block Size) list configured by the upper layer. If a result of blind detection is correct, an ACK is reported, and there is no reporting if all are incorrect. A number of the sub-frame is recorded if correct.

For a second transmission, firstly, whether the CRC of the first transmission is correct is determined according to PTR (a pointer pointing to formerly transmitted data), and if correct, the ACK is reported directly rather than decoding, a corresponding number of the sub-frame is recorded at the same time. If the CRC is false, it is to search for an HARQ process, and HS-DSCH rate de-matching operation is started for a sub-frame corresponding to the PTR before the HARQ process, then HS-DSCH rate de-matching operation is started for current sub-frame, and HARQ combination is performed, then turbo decoding and CRC are performed on data after HARQ combination. If the CRC is correct, the ACK is reported, and an HARQ occupation flag is cleared; and if the CRC is false, the NACK is reported.

A TBS would be configured by the software, rate matching would be performed by hardware according to the TBS, rate de-matching is performed on the current sub-frame data and historical sub-frame data by the hardware respectively, and HARQ combination is performed, one HARQ buffer is required to be occupied if CRC is false.

In the embodiment, for the third transmission, it is required to find the HARQ corresponding to the second transmission is placed in which process to start rate de-matching, HARQ combination, turbo decoding and CRC. The ACK is reported if CRC is successful, and the NACK is reported if CRC is unsuccessful. Regardless whether CRC is successful, the HARQ process is required to be cleared.
during the third transmission, an advantage of the HARQ process combination lies in that data stored in the HARQ buffer is HARQ combination of data of the first two transmissions. So it is only required to start rate matching and perform an HARQ combination. If initial LLRs are required to be combined, rate matching is required to be started for three times and the buffer of initial LLRs is required to be doubled.

For the third transmission, if corresponding HARQ process is not found, only rate matching, decoding, CRC will be performed on data of the sub-frame, and HARQ combination will not be performed (code rate of HS-SCCH-less HS-DSCH is usually lower). If there is no corresponding HARQ process, which means that former data are cleared or management of the HARQ has been in an error, current sub-frame is decoded, it is desirable that current sub-frame could make up for a loss caused by an error of the management of the HARQ.

In the embodiment, it is required to search in each sub-frame, if more than 13 sub-frames are continuously occupied by an HARQ process, it is required to clear the HARQ process to avoid wrong combination.

For example, the current HARQ process corresponds to sub-frame 5, therefore, after going through 13 sub-frames, the current HARQ process return to sub-frame 5 again, which means that there is no longer a retransmission at this time, and the HARQ process is required to be cleared.

Dynamically scheduling the HS-SCCH-less process by software is very flexible.

In the embodiment, for the second transmission and the third transmission, if the HARQ process is full, rate de-matching, turbo decoding, and CRC are performed on the subframe data directly. That the HARQ process is full means that more than 3 HARQ processes are scheduled by the network, and at this time data of occupied HARQ progress could not be cleared. Therefore, the data of this transmission are can only be self-decoded, and performance is lost.

For some HARQ process, if status update is performed for more than 13 sub-frames, the HARQ process is required to be cleared to avoid wrong HARQ combination.

Further, if the HARQ process of the second transmission is full, a de-interleaving buffer dynamically scheduled by the HS-SCCH may be served as the HARQ buffer of the HARQ process temporarily to perform an HARQ combination to decode, to improve the performance. If a repetition rate is matched or a punctured rate is matched, and a code rate is lower than a threshold, a self-decoding function is started.

FIG. 2 is a schematic diagram of an apparatus for processing retransmitted data in HS-SCCH-less according to an embodiment of the present invention, and as shown in FIG. 2, the apparatus comprises:
a searching module, configured to search for an HARQ process when data are retransmitted in an HS-SCCH-less blind detection process; and
a processing module, configured to process the retransmitted data according to a condition of the HARQ process.

In a preferred embodiment, the processing module may be configured to, if the HARQ process is not full, perform the HARQ process combination for historical sub-frame data and current sub-frame data and process data after the HARQ process combination; and if the HARQ process is full, perform a self-decoding processing on the retransmitted data.

Wherein, if the HARQ process is not full, the processing module performing the HARQ process combination for historical sub-frame data and current sub-frame data, and processing data after the HARQ process combination, may comprise: when data are retransmitted for a first time, if the HARQ process is not full, the HARQ process combination is performed on the historical sub-frame data and current sub-frame data in case of determining a cycle redundancy check error when transmitting data initially; the data after the HARQ process combination are decoded and cyclic redundancy check is performed on the data, and if the cyclic redundancy check is correct, an Acknowledgement is reported and a current HARQ process occupation flay is cleared.

Wherein, if the HARQ process is not full, the processing module performing the HARQ process combination on the historical sub-frame data and current sub-frame data and processing the data after the HARQ process combination, comprises: when data are retransmitted for a second time, in a case that HARQ process corresponding to retransmitting data for the first time is found, the HARQ process combination is performed on the historical sub-frame data and current sub-frame data; the data after the HARQ process combination are decoded and cyclic redundancy check is performed on the data, and current HARQ process occupation flag is cleared.

In a preferred embodiment, the processing module processing the retransmitted data according to a condition of the HARQ process, may comprise: the HARQ process is cleared if 13 or more sub-frames are continuously occupied by the HARQ process.

Those ordinarily skilled in the art can understand that all or some of steps of the abovementioned method may be completed by the programs instructing the relevant hardware, and the programs may be stored in a computer-readable storage medium, such as read only memory, magnetic or optical disk or the like. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limit to any specific form of the combination of the hardware and software.

The above description is only the preferred embodiments of the present invention. Certainly, the present invention can also have a variety of other embodiments. Those skilled in the art can make the corresponding modifications and variations according to the present invention without departing from the rule and essence of the present invention. And all of these modifications or the variations should be embodied in the protection scope of the appended claims of the present invention.

### Industrial Applicability

The embodiments of the present invention can save control signaling load and flexibly schedule the HS-SCCH-less process.

## Claims

1. A method for processing retransmitted data in High Speed Shared Control less operation (HS-SCCH-less), comprising:
searching for an automatic repeat request (HARQ) process when data are retransmitted in an HS-SCCH-less blind detection process; and
processing the retransmitted data according to a condition of the HARQ process.

2. The method according to claim 1, wherein, said processing the retransmitted data according to a condition of the HARQ process, comprises:
performing an HARQ process combination on historical sub-frame data and current sub-frame data if the HARQ process is not full, and processing data after the HARQ process combination;
performing a self-decoding processing on the retransmitted data if the HARQ process is full.

3. The method according to claim 2, wherein,
said performing an HARQ process combination on historical sub-frame data and current sub-frame data if the HARQ process is not full, comprises:
when data are retransmitted for a first time, if the HARQ process is not full, performing the HARQ process combination on the historical sub-frame data and the current sub-frame data in a case of determining a cycle redundancy check error when transmitting data initially;
said processing data after the HARQ process combination, comprises:
decoding and performing cyclic redundancy check on the data after the HARQ process combination, and if the cyclic redundancy check is correct, reporting an Acknowledgement and clearing a current HARQ process occupation flag.

4. The method of claim 2, wherein,
said performing an HARQ process combination on historical sub-frame data and current sub-frame data if the HARQ process is not full, comprises:
when data are retransmitted for a second time, in a case that the HARQ process corresponding to retransmitting data for the first time is found, performing the HARQ process combination on the historical sub-frame data and the current sub-frame data;
said processing data after the HARQ process combination, comprises:
decoding and performing cyclic redundancy check on the data after the HARQ process combination, and clearing a current HARQ process occupation flag.

5. The method according to claim 1, wherein, said processing the retransmitted data according to a condition of the HARQ process, comprises:
clearing the HARQ process if 13 or more sub-frames are continuously occupied by the HARQ process.

6. An apparatus for processing retransmitted data in HS-SCCH-less, comprising:
a searching module, configured to search for an automatic repeat request (HARQ) process when data are retransmitted in an HS-SCCH-less blind detection process; and
a processing module, configured to process the retransmitted data according to a condition of the HARQ process.

7. The apparatus according to claim 6, wherein:
the processing module is configured to, if the HARQ process is not full, perform an HARQ process combination on historical sub-frame data and current sub-frame data and process data after the HARQ process combination; and if the HARQ process is full, perform a self-decoding processing on the retransmitted data.

8. The apparatus according to claim 7, wherein:
the processing module is configured to perform an HARQ process combination on historical sub-frame data and current sub-frame data and process data after the HARQ process combination by means of: when data are retransmitted for a first time, if the HARQ process is not full, performing the HARQ process combination on the historical sub-frame data and the current sub-frame data in a case of determining a cycle redundancy check error when transmitting data initially; decoding and performing cyclic redundancy check on the data after the HARQ process combination, and if the cyclic redundancy check is correct, reporting an Acknowledgement and clearing a current HARQ processes occupation flag.

9. The apparatus according to claim 7, wherein:
the processing module is configured to perform an HARQ process combination on historical sub-frame data and current sub-frame data and process the data after the HARQ process combination by means of: when data are retransmitted for a second time, in a case that the HARQ process corresponding to retransmitting data for the first time is found, performing the HARQ process combination on the historical sub-frame data and the current sub-frame data; decoding and performing cyclic redundancy check on the data after the HARQ process combination, and clearing a current HARQ process occupation flag.

10. The apparatus according to claim 6, wherein:
the processing module is configured to process the retransmitted data according to a condition of the HARQ process by means of: clearing the HARQ process if 13 or more sub-frames are continuously occupied by the HARQ process.
